# EUROPEAN PATENT SPECIFICATION

(11) **EP 2 781 975 B1**
(45) Date of publication and mention of the grant of the patent: **28.09.2016**
(21) Application number: 14155747.0
(22) Date of filing: 19.02.2014
(51) Int. Cl.: G05B 13/02, A01D 41/127

(54) **Harvester with fuzzy control system for detecting steady crop processing state**
Erntemaschine mit Fuzzy-Steuerungssystem zur Erkennung von beständigem Erntegutverarbeitungszustand
Moissonneuse avec système de commande floue pour détecter l'état de traitement de cultures stables

(30) Priority: 18.03.2013 US 201313845712
(43) Date of publication of application: 24.09.2014
(73) Proprietor: Deere & Company, Moline, IL 61265 (US)
(72) Inventor: Blank, Sebastian, 67657 Kaiserslautern (DE); Mott, Cameron R, Davenport, Iowa 52806 (US)
(74) Representative: Holst, Sönke

(56) References cited:
- US-B1- 6 315 658
- US-B1- 6 405 122
- US-B2- 6 726 559
- YUAN ZHOU ET AL: "Research on Application of Fuzzy Neural Network in Combine Harvester", FUZZY SYSTEMS AND KNOWLEDGE DISCOVERY, 2008. FSKD '08. FIFTH INTERNATIONAL CONFERENCE ON, IEEE, PISCATAWAY, NJ, USA, 18 October 2008 (2008-10-18), pages 231-235, XP031357668, ISBN: 978-0-7695-3305-6

## Description

The present invention relates generally to agricultural implements such as combines and, more specifically, to control of adjustments on such implements.

A modern agricultural harvester such as a combine is essentially a factory operating in the field with many interacting and complex adjustments to accommodate continually changing crop, field and machine conditions during harvest. These harvesters normally comprise a number of actuators for controlling process parameters to be set to appropriate operating positions or parameters. Generally, harvesters have controllers for automatic control of the actuators, using crop sensor values for crop conditions, like moisture and throughput, processing result sensor values for results of crop processing, like losses and undesired material in the clean grain elevator, and providing automatic adjustment values for actuators influencing crop processing members of the harvester based on the crop sensor values and processing result sensor values. The latter can be replaced or augmented by operator inputs, after the operator has visually or manually checked the process results.

The actuators are thus adjusted based upon sensor values. Since crop processing in a harvesting machine is time consuming, it takes some time until the process has come to a steady state after a crop condition, like throughput or moisture, or an actuator adjustment has changed. Additionally, tailings containing unthreshed ears are fed from the rear end of a cleaning system to a thresher or to a re-thresher that, on its end, feeds them back to the cleaning system, such that crop particles may circulate a number of times between the cleaning system and the (re-) thresher until they leave the process. Thus, it takes a certain amount of time until the threshing and cleaning process has come to a steady state after a process parameter change. Only after this steady state has been reached, it makes sense to collect the processing result sensor values and to use them for feedback purposes of the controller. If sensor values are taken too early, they can be misleading and result in inappropriate actuator adjustments.

In the prior art, previous systems wait for a predetermined time that is selected sufficiently long such that it is assumed that the steady state must have been reached, or they wait until the operator manually indicated the system has reached steady-state (see, for example, US 6 726 559 B2).

Other previous systems check the processing result sensor values after waiting the predetermined time and the throughput or processing result sensor values fell within a certain tolerance band before determining that the system has reached steady-state. In these arrangements, the operator can change the tolerance band and the time interval (see, for example, US 6 863 604 B2).

In the prior art, the predetermined time (the waiting time) has to be sufficiently large in order to achieve that the steady state has been reached under all operating conditions. However, the time until the steady state is reached depends on a number of factors. For example, the steady state will be reached sooner at lower throughputs than at high throughputs. In most cases, this predetermined time delay will thus be unnecessarily long, such that the control process is relatively slow.

It is therefore an object of the present invention to provide an improved control system for an agricultural harvester. It is another object to provide such a system, which overcomes most, or all of the aforementioned problems.

A method, a system and a harvesting machine are arranged to detect a steady operating state of the harvesting machine. A crop parameter sensor senses at least one crop parameter of crop that is at least one of processed and to be processed in the harvesting machine. A processing result sensor senses at least one processing result parameter of a result of crop processing in the harvesting machine. The sensed crop parameter, the processing result parameter and time derivatives of the sensed crop parameter and the processing result parameter are submitted as input signals to a fuzzy logic circuit. The fuzzy logic circuit derives a steady state signal value that is binary and is based upon the input signals, wherein the steady-state signal value indicates a steady state of the crop processing in the harvesting machine.

The fuzzy logic circuit preferably comprises a parameter range classifier circuit for each input signal, the parameter range classifier circuit providing a respective continuous output indicating the probability that a steady state of the crop processing in the harvesting machine has been reached. The fuzzy logic circuit comprises a result evaluation circuit receiving the multitude of the parameter range classifier circuit outputs and providing the steady state signal value based upon an overall evaluation of the parameter range classifier circuit outputs.

The fuzzy logic circuit preferably additionally provides a confidence signal output indicating an accurateness of the steady state signal and/or a time signal indicating the time interval for reaching the steady state after a crop processing parameter in the harvesting machine was altered.

The fuzzy logic circuit can have a trigger function input for specifying the required level of confidence for the steady state signal to indicate a steady state.

Further, the fuzzy logic circuit may have a trigger function input for prioritizing classifier outputs in the evaluation process such that measurements e.g. from low accuracy sensors or signals that resemble a less significant steady state indication can be outweighed.

The binary steady state signal value is preferably submitted to a controller for one of automatic control of at least one actuator for adjusting a crop processing parameter of the harvesting machine and of controlling an operator interface for indicating at least one adjustment value for at least one actuator to a machine operator. The controller receives the signal indicating the sensed crop parameter and the signal indicating the processing result parameter and evaluates the actuator value based upon the received signals only once the steady state signal value indicates that a steady processing state of the harvesting machine is reached.

These and other objects, features and advantages of the invention will become apparent to one skilled in the art upon reading the following description in view of the drawings.
Fig. 1 is a side view of a harvester utilizing the control system of the present invention.
Fig. 2 is a schematic diagram of a control system of the harvester shown in Figure 1.

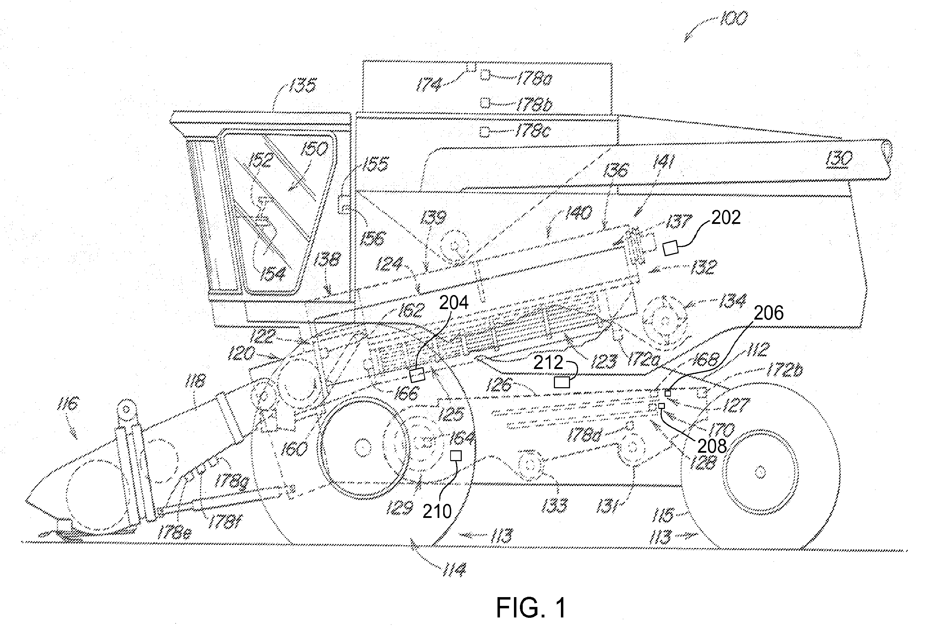

Referring now to Figure 1, an agricultural harvester 100 in the form of a combine is shown, the harvester 100 comprising a main frame 112 having wheel structures 113, the wheel structures 113 comprising front wheels 114 and rear wheels 115 supporting the main frame 112 for forward movement over a field of crop to be harvested. The front wheels 114 are driven by an electronically controlled hydrostatic transmission and the rear wheels 115 are steered.

A header 116 that is vertically adjustable and is shown here as a harvesting platform is used for harvesting a crop and directing it to a feederhouse 118. The feederhouse 118 is pivotally connected to the main frame 112 and includes a conveyor for conveying the harvested crop to a beater 120. The beater 120 directs the crop upwardly through an inlet transition section 122 to a rotary threshing and separating assembly 124. Other orientations and types of threshing structures and other types of headers 116, such as header that comprises a generally transverse frame, the frame further supporting individual row units spaced apart across the width of the frame, could also be used. As another alternative, a draper platform could be used in which a transverse frame supports endless belt conveyors carry crop from the sides of the header toward a central region, and a conveyor in the central region conveys the crop rearward through an central aperture.

The rotary threshing and separating assembly 124 threshes and separates the harvested crop material. Grain and chaff fall through a concave 125 and separation grates 123 on the bottom of the separating assembly 124 to a cleaning system 126, and are cleaned by a chaffer 127 and a sieve 128 and air fan 129. The cleaning system 126 removes the chaff and directs the clean grain to a clean grain tank by a grain auger 133. The clean grain in the tank can be unloaded into a grain cart or truck by unloading auger 130. Tailings fall into the returns auger 131 and are conveyed to the rotary threshing and separating assembly 124 (or to a separate re-thresher, not shown) where they are threshed a second time.

Threshed and separated straw is discharged from the rotary threshing and separating assembly 124 through an outlet 132 to a discharge beater 134. The discharge beater 134 in turn propels the straw out the rear of the harvester 100. It should be noted that the discharge beater 134 could also discharge the straw directly to a straw chopper. The operation of the harvester 100 is controlled from an operator's cab 135.

The rotary threshing and separating assembly 124 comprises a housing 136 for a cylindrical rotor and a rotor 137 located inside the housing 136. The front part of the rotor and the rotor housing define the infeed section 138. Downstream from the infeed section 138 are a threshing section 139, a separating section 140 and a discharge section 141. The rotor 137 in the infeed section 138 is provided with a conical rotor drum having helical infeed elements for engaging harvested crop material received from the beater 120 and inlet transition section 122. Immediately downstream from the infeed section 138 is the threshing section 139.

In the threshing section 139 the rotor 137 comprises a cylindrical rotor drum having a number of threshing elements for threshing the harvested crop material received from the infeed section 138. Downstream from the threshing section 139 is the separating section 140 wherein the grain trapped in the threshed crop material is released and falls to the cleaning system 126. The separating section 140 merges into a discharge section 141 where crop material other than grain is expelled from the rotary threshing and separating assembly 124.

An operator's console 150 located in the operator's cab 135 includes conventional operator controls including a hydro shift lever 152 for manually controlling the speed range and output speed of the hydrostatic transmission for driving the front wheels 114. An operator interface device 154 in the operator's cab 135 allows entry of information into a control arrangement 155 comprising an on-board processor system, which provides automatic speed control and numerous other control functions described below for the harvester 100. The operator can enter various types of information into the operator interface device 154, including crop type, location, yield and the like.

Signals from the sensors include information on environmental variables such as relative air humidity, and information on variables controlled by the on-board control system. Signals include vehicle speed signals from a radar sensor or other conventional ground speed sensor 160, rotor speed signals from a rotor speed sensor 162 a fan speed signal from the fan speed sensor 164, a concave clearance signal from a concave clearance sensor 166, a chaffer opening signal from a chaffer opening sensor 168 and sieve opening signal from a sieve opening sensor 170, respectively. Additional signals originate from a grain-loss sensor 172a at the exit of the rotary threshing and separating assembly 124, grain-loss sensors 172b at either side of the exit of the cleaning system 126, a grain-damage sensor 174 and various other sensor devices on the harvester. Signals from a tank cleanliness sensor 178a, a mass flow sensor 178b, a grain moisture sensor 178c, a tailings volume sensor 178d, a relative humidity sensor 178e, a temperature sensor 178f and a material moisture sensor 178g are also provided.

The relative humidity sensor 178e, the temperature sensor 178f and the material moisture sensor 178g indicate conditions of the cut crop material prior to its being processed (i.e. threshed, cleaned, or separated) in the harvester 100.

A communications circuit directs signals from the mentioned sensors and an engine speed monitor, a grain mass flow monitor, and other microcontrollers on the harvester to the control arrangement 155. Signals from the operator interface device 154 are also directed to the control arrangement 155. The control arrangement 155 is connected to actuators 202, 204, 206, 208, 210, 212 for controlling adjustable elements on the harvester 100.

The actuators controlled by the control arrangement 155 comprise a rotor speed actuator 202 configured to control the rotational speed of the rotor 137, a concave clearance actuator 204 configured to control the clearance of the concave 125, a chaffer opening actuator 206 configured to control the opening width of the chaffer 127, a sieve opening actuator 208 configured to control the opening of the sieve 128, a fan speed actuator 210 configured to control the speed of the air fan 129, and a ground speed actuator 212 configured to control the output speed of the hydrostatic transmission 114t and thus the ground speed of the harvester 100. These actuators are known in the art and thus are schematically shown in Figure 1.

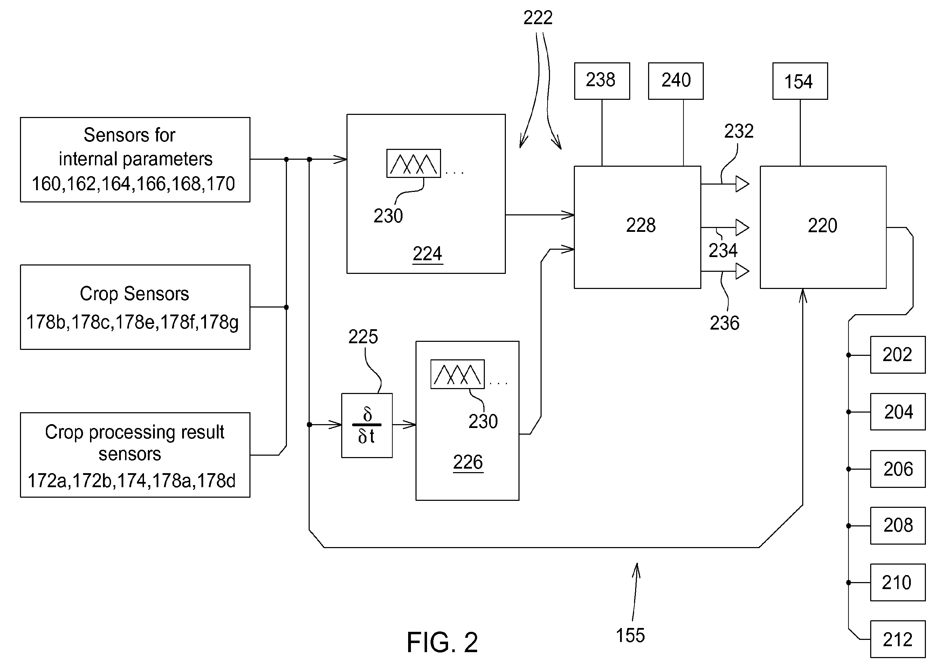

Reference is now made to Figure 2. The control arrangement 155 comprises a controller circuit 220 that receives signals from the ground speed sensor 160, the rotor speed sensor 162, the fan speed sensor 164, the concave clearance sensor 166, the chaffer opening sensor 168, and the sieve opening sensor 170 (which represent internal parameters of the harvesting machine), crop sensors (which include the mass flow sensor 178b, the moisture sensor 178c, the relative humidity sensor 178e, the temperature sensor 178f, the material moisture sensor 178g and crop processing result sensors (which include grain-loss sensor 172a, the grain-loss sensor 172b, grain-damage sensor 174, tank cleanliness sensor 178a, and tailings volume sensor 178d).

The controller circuit 220 comprises one or more electronic control units (ECUs) each of which further comprise a digital microprocessor coupled to a digital memory circuit. The digital memory circuit contains instructions that configure the ECU to perform the functions described herein.

There may be a single ECU that provides all the functions of the controller circuit 220 described herein. Alternatively there may be two or more ECU's connected to each other using one or more communications circuits. Each of these communications circuits may comprise one or more of a data bus, CAN bus, LAN, WAN or other communications arrangement.

In an arrangement of two or more ECUs, each of the functions described herein may be allocated to a individual ECU of the arrangement. These individual ECU's are configured to communicate the results of their allocated functions to other ECUs of the arrangement.

The harvester 100 further comprises a differentiating circuit 225 which is coupled to each of the sensors 160, 162, 164, 166, 168, 170, 178b, 178c, 178e, 178f, 178g, 172a, 172b, 174, 178a, 178d to receive a corresponding signal therefrom. The differentiating circuit 225 is configured to calculate a time rate of change for each of the signals it receives from sensors 160, 162, 164, 166, 168, 170, 178b, 178c, 178e, 178f, 178g, 172a, 172b, 174, 178a, 178d. The differentiating circuit 225 is further configured to transmit a corresponding continuous signal for each of the sensors indicating the time rate of change for that sensor 160, 162, 164, 166, 168, 170, 178b, 178c, 178e, 178f, 178g, 172a, 172b, 174, 178a, 178d. The differentiating circuit 225 is coupled to the second parameter range classifier circuit 226 to provide the continuous time rate of change signals to the second parameter range classifier circuit 226.

The harvester 100 further comprises a system for detecting a steady operating state of the harvester 100. This system comprises a fuzzy logic circuit 222 that comprises a first parameter range classifier circuit 224, a second parameter range classifier circuit 226 and a result evaluation circuit 228.

The fuzzy logic circuit 222 comprises one or more electronic control units (ECUs) each of which further comprise a digital microprocessor coupled to a digital memory circuit. The digital memory circuit contains instructions that configure the ECU to perform the functions described herein.

There may be a single ECU that provides all the functions of the fuzzy logic circuit 222 described herein. Alternatively there may be two or more ECU's connected to each other using one or more communications circuits. Each of these communications circuits may comprise one or more of a data bus, CAN bus, LAN, WAN or other communications arrangement.

In an arrangement of two or more ECUs, each of the functions described herein may be allocated to a individual ECU of the arrangement. These individual ECU's are configured to communicate the results of their allocated functions to other ECUs of the arrangement.

A first parameter range classifier circuit 224 receives signals from the ground speed sensor 160, the rotor speed sensor 162, the fan speed sensor 164, the concave clearance sensor 166, the chaffer opening sensor 168, and the sieve opening sensor 170 for internal parameters, from the crop sensors (which include the mass flow sensor 178b, the moisture sensor 178c, the relative humidity sensor 178e, the temperature sensor 178f, and the material moisture sensor 178g) and from the crop processing result sensors (which include the grain-loss sensor 172a, the grain-loss sensor 172b, the grain-damage sensor 174, the tank cleanliness sensor 178a, and the tailings volume sensor 178d).

A second parameter range classifier circuit 226 receives the time rate of change signals for each sensor 160, 162, 164, 166, 168, 170, 178b, 178c, 178e, 178f, 178g, 172a, 172b, 174, 178a, 178d from the differentiating circuit 225, which in turn received signals from the ground speed sensor 160, the rotor speed sensor 162, the fan speed sensor 164, the concave clearance sensor 166, the chaffer opening sensor 168, and the sieve opening sensor 170 for internal parameters, from the crop sensors (including mass flow sensor 178b, moisture sensor 178c, relative humidity sensor 178e, temperature sensor 178f, material moisture sensor 178g) and from the crop processing result sensors (including grain-loss sensor 172a, the grain-loss sensor 172b, grain-damage sensor 174, tank cleanliness sensor 178a, and tailings volume sensor 178d).

Each of the first parameter range classifier circuit 224 and the second parameter range classifier circuit 226 comprises several fuzzy classifier circuits 230.

Each of the sensors 160, 162, 164, 166, 168, 170, 172a, 172b, 174, 178a, 178d,178b, 178c, 178e, 178f, and 178g is coupled to a corresponding fuzzy classifier circuit 230 of the first parameter range classifier circuit 224 to transmit its sensor signal thereto.

Each of the sensors 160, 162, 164, 166, 168, 170, 172a, 172b, 174, 178a, 178d,178b, 178c, 178e, 178f, and 178g is coupled to a corresponding fuzzy classifier circuit 230 of the second parameter range classifier circuit 226 (via the differentiating circuit 225) to transmit a time derivative of it sensor signal thereto.

Each of the fuzzy classifier circuits 230 is configured to classify the sensor signal it receives into a number of classes. Each of the fuzzy classifier circuits 230 in the first parameter range classifier circuit 224 evaluates the range (fuzzy class) of its corresponding sensor signal. Each of the fuzzy classifier circuits 230 in the second parameter range classifier circuit 226 evaluates the change rate of its corresponding sensor signal.

All of the fuzzy classifier circuits 230 perform their classifications according to a predetermined specification that is generated in advance based on expert knowledge or another suitable system. The particular parameters and coefficients employed by each fuzzy classifier circuit 230 will depend upon the type of sensor to which the fuzzy classifier circuit 230 is coupled. They will also depend upon the physical construction of the harvester, which determines how fast the various subsystems reach a steady state of operation. They will also depend upon the type of actuators used and how fast they respond to changes commanded by the controller circuit 220.

Changes to the specification during runtime are possible, if needed. The fuzzy classifier circuits 230 each provide a continuous output indicating the probability that a steady state of the crop processing in the harvester 100 has been reached. These outputs, the number of which corresponds to the number of input signals, are transmitted to the result evaluation circuit 228.

The result evaluation circuit 228 provides a steady state signal value 232 to controller circuit 220. The steady state signal value 232 is based upon an overall evaluation of the outputs of the first parameter range classifier circuit 224 and the second parameter range classifier circuit. The steady state signal value is binary (0 or 1). It represents whether the steady state has been reached, i.e. whether it can be assumed that the crop processing operation (crop process) in the harvester 100 is continuous again after a parameter (like an actuator adjustment or a crop property) has been changed. If the steady state signal value 232 is 1, the state is considered as steady and if the steady state signal value 232 is 0, the state is not yet steady.

The fuzzy classifier circuits 230 perform the fuzzification of their respective sensor signals to provide corresponding fuzzified signals. The result evaluation circuit 228 is coupled to the first parameter range classifier circuit 224 and the second parameter range classifier circuit 226 to receive and combine these fuzzified signals using an inference engine that applies a rule base, followed by a defuzzification. A suitable fuzzy logic circuit 222 is described, for example, in US 6,315.658 B1.

The result evaluation circuit 228 generates and outputs a confidence signal output 234 indicating the accurateness of the steady state signal value 232 to controller circuit 220. The magnitude of the confidence signal output 234 indicates the probability that the steady state signal value 232 is correct (e.g. accurate).

Additionally, the result evaluation circuit 228 provides a time signal 236 indicating the time interval for reaching the steady state after a crop processing parameter in the harvester 100 was altered to controller circuit 220.

The result evaluation circuit 228 has a trigger function input 238 for specifying the required level of confidence for the steady state signal to indicate a steady state. The operator provides the trigger function input 238 by manipulation of the operator interface device 154.

The trigger function input 238 allows the operator to input via the operator interface device 154 whether according to his opinion a high confidence in the steady state is necessary (as might be the case in difficult crop conditions like moist grain) or not. In the latter case, the adjustment process can be accelerated.

The result evaluation circuit 228 has a weighing function input 240 for prioritizing outputs of fuzzy classifier circuits 230 in an evaluation process performed by the result evaluation circuit 228 such that measurements from low accuracy sensors can be outweighed. The operator can thus indicate via the operator interface device 154 that a particular sensor, like the grain-loss sensor 172a, the grain-loss sensor 172b (that require regular calibration) is considered as less accurate and thus its relevance in the evaluation process in the result evaluation circuit 228 is reduced.

The controller circuit 220 thus receives the signals from the ground speed sensor 160, the rotor speed sensor 162, the fan speed sensor 164, the concave clearance sensor 166, the chaffer opening sensor 168, and the sieve opening sensor 170, crop sensors (which include the mass flow sensor 178b, the moisture sensor 178c, the relative humidity sensor 178e, the temperature sensor 178f, and the material moisture sensor 178g) and crop processing result sensors (which include the grain-loss sensor 172a, the grain-loss sensor 172b, the grain-damage sensor 174, the tank cleanliness sensor 178a, and the tailings volume sensor 178d), as mentioned above. The controller circuit 220 uses these signals to generate control signals for the actuators 202, 204, 206, 208, 210, 212 in order to achieve an optimal crop processing result. For details of the operation of the controller circuit 220, reference is made to the prior art described in US 6,726,559 B2 and US 6,863,604 B2. In another possible embodiment, controller circuit 220 can give proposals for actuator adjustment values to the operator via the operator interface device 154, such that the operator can adjust the actuators manually.

The signals from the processing result sensors (which include the grain-loss sensor 172a, the grain-loss sensor 172b, the grain-damage sensor 174, the tank cleanliness sensor 178a, and the tailings volume sensor 178d) are important for obtaining feedback signals to the controller circuit 220 such that the latter can provide optimal actuator adjustment signals for the actuators 202, 204, 206, 208, 210, 212. Once a crop parameter has changed, for example when soil properties on a field change, or the harvester 100 has turned in the headland of a field, or one or more of the actuators 202, 204, 206, 208, 210, 212 have been adjusted by the controller circuit 220, it takes some time until the crop processing operation in the harvester 100 has come to a steady state. Only after the steady state was reached, it makes sense to look into the signals from the processing result sensors (which include the grain-loss sensor 172a, the grain-loss sensor 172b, the grain-damage sensor 174, the tank cleanliness sensor 178a, and the tailings volume sensor 178d), since they are not representative for the crop processing operation before that point time of time.

The system for detecting a steady operating state of the harvester 100 comprising the fuzzy logic circuit 222 serves to detect the steady state. It derives this information from the signals of the ground speed sensor 160, the rotor speed sensor 162, the fan speed sensor 164, the concave clearance sensor 166, the chaffer opening sensor 168, and the sieve opening sensor 170, of the crop sensors (which include the mass flow sensor 178b, the moisture sensor 178c, the relative humidity sensor 178e, the temperature sensor 178f, and the material moisture sensor 178g) and of the crop processing result sensors (which include the grain-loss sensor 172a, the grain-loss sensor 172b, the grain-damage sensor 174, the tank cleanliness sensor 178a, and the tailings volume sensor 178d) and submits the steady state signal value 232 to controller circuit 220. The latter only uses signals from the processing result sensors (which include the grain-loss sensor 172a, the grain-loss sensor 172b, the grain-damage sensor 174, the tank cleanliness sensor 178a, and the tailings volume sensor 178d) when the steady state signal value 232 indicates a steady state. The confidence signal output 234 can be considered by the controller circuit 220 for weighing the relevance of the processing result sensors (which include the grain-loss sensor 172a, the grain-loss sensor 172b, the grain-damage sensor 174, the tank cleanliness sensor 178a, and the tailings volume sensor 178d), compared with other inputs, like those from the crop sensors (which include the mass flow sensor 178 b, the moisture sensor 178c, the relative humidity sensor 178e, the temperature sensor 178f, and the material moisture sensor 178g. Additionally, the time signal 236 can be used by the controller circuit 220 for deriving crop properties (like throughput) that are used for evaluating the actuator signals.

Having described the preferred embodiment, it will become apparent that various modifications can be made without departing from the scope of the invention as defined in the accompanying claims. For example, the trigger function input 238 for specifying the required level of confidence for the steady state signal to indicate a steady state can be provided by the controller circuit 220 based upon actual crop conditions. Likewise, the weighing function input 240 for prioritizing outputs of fuzzy classifier circuits 230 in the evaluation process of the result evaluation circuit 228 can be provided by controller circuit 220, based upon the signals from the respective sensors, in particular the processing result sensors (which include the grain-loss sensor 172a, the grain-loss sensor 172b, the grain-damage sensor 174, the tank cleanliness sensor 178a, and the tailings volume sensor 178d) and/or the crop sensors (which include the mass flow sensor 178b, the moisture sensor 178c, the relative humidity sensor 178e, the temperature sensor 178f, and the material moisture sensor 178g). The relevance of sensors with low accuracy or reliability can thus automatically be reduced based upon the sensor signal and preferably a comparison with signals from other sensors. Although the harvester 100 is shown as a combine, the system described above is also suitable for use with other harvesters as well as other implements having interacting and complex adjustments to accommodate various types of continually changing operating conditions.

## Claims

1. A method for detecting a steady operating state of a harvester (100), comprising steps of:
electronically sensing a crop parameter (178b, 178c, 178e, 178f, 178g) in the harvester (100);
electronically sensing a processing result parameter (172a, 172b, 174, 178a, 178d) of a result of crop processing in the harvester (100);
electronically transmitting the crop parameter, the processing result parameter, a time derivative of the crop parameter and a time derivative of the processing result parameter as input signals to a fuzzy logic circuit (222);
**characterized by**
electronically generating, by the fuzzy logic circuit (222), a steady state signal value (232) that is binary and is based upon the input signals, wherein the steady state signal value (232) indicates a steady state of the crop processing in the harvester (100).

2. The method for detecting a steady operating state of a harvester (100) according to claim 1, wherein the fuzzy logic circuit (222) comprises a parameter range classifier circuit (224, 226) for each input signal, the parameter range classifier circuit (224, 226) providing a respective continuous output indicating a probability that the harvester (100) has reached a steady state of crop processing, and wherein the fuzzy logic circuit (222) comprises a result evaluation circuit (228) configured to receive the parameter range classifier circuit (224, 226) outputs and to generate the steady state signal value (232) based upon the parameter range classifier circuit (224, 226) outputs.

3. The method for detecting a steady operating state of a harvester (100) according to claim 1, wherein the fuzzy logic circuit (222) provides a confidence signal output (234) indicating an accurateness of the steady state signal value (232).

4. The method for detecting a steady operating state of a harvester (100) according to claim 1, wherein the fuzzy logic circuit (222) provides a time signal (236) indicating a time interval for reaching the steady state after a crop processing parameter in the harvester (100) is altered.

5. The method for detecting a steady operating state of a harvester (100) according to claim 1, wherein the fuzzy logic circuit (222) is responsive to a trigger function input (238), and further wherein the trigger function input (238) indicates a minimum level of confidence that the fuzzy logic circuit (222) must determine before the fuzzy logic circuit (222) will command the steady state signal value (232) to indicate that the steady state has been reached.

6. The method for detecting a steady operating state of a harvester (100) according to claim 1, wherein the fuzzy logic circuit (222) is responsive to a weighing function input (240), and further wherein the fuzzy logic circuit (222) is configured to prioritize classifier outputs in an evaluation process such that measurements from low accuracy sensors can be outweighed.

7. A system adapted to detect a steady operating state of a harvester (100), comprising:
a crop sensor (178b, 178c, 178e, 178f, 178g) for sensing a crop parameter;
a processing result sensor (172a, 172b, 174, 178a, 178d) for sensing a processing result parameter of a result of crop processing in the harvester (100);
a fuzzy logic circuit (222) configured to receive a signal indicating the crop parameter, a signal indicating the processing result parameter and signals indicating time derivatives of the crop parameter and the processing result parameter as input signals;
**characterized in that**
the fuzzy logic circuit (222) is configured to generate a steady state signal value (232) that is binary and is based upon the input signals, wherein the steady state signal value (232) indicates a steady state of the crop processing in the harvester (100).

8. The system according to claim 7, wherein the fuzzy logic circuit (222) comprises a parameter range classifier circuit (224, 226) for each input signal, the parameter range classifier circuit (224, 226) providing a respective continuous output indicating a probability that the harvester (100) has reached a steady state of crop processing has been reached, and wherein the fuzzy logic circuit (222) comprises a result evaluation circuit (228) configured to receive the parameter range classifier circuit (224, 226) outputs and to generate the steady state signal value (232) based upon the parameter range classifier circuit (224, 226) outputs.

9. The system according to claim 7, wherein the fuzzy logic circuit (222) additionally provides a confidence signal output (234) indicating an accurateness of the steady state signal value (232).

10. The system according to claim 7, wherein the fuzzy logic circuit (222) additionally provides a time signal (236) indicating a time interval for reaching the steady state after a crop processing parameter in the harvester (100) was altered.

11. The system according to claim 7, wherein the fuzzy logic circuit (222) is responsive to a trigger function input (238) and further wherein the trigger function input (238) indicates a minimum level of confidence that the fuzzy logic circuit (222) must determine before the fuzzy logic circuit (222) will command the steady state signal value (232) to indicate that the steady state has been reached.

12. The system according to claim 7, wherein the fuzzy logic circuit (222) has a weighing function input (240), and further wherein the fuzzy logic circuit (222) is configured to prioritize classifier outputs in an evaluation process such that measurements from low accuracy sensors can be outweighed.

13. A harvester (100) comprising a system according to one of claims 7 to 12 for detecting a steady operating state of the harvester (100), the system comprising:
at least one crop sensor (178b, 178c, 178e, 178f, 178g) for sensing a crop parameter;
at least one processing result sensor (172a, 172b, 174, 178a, 178d) for sensing a processing result parameter of a result of crop processing in the harvester (100);
a fuzzy logic circuit (222) is configured to receive a signal indicating the crop parameter, a signal indicating the processing result parameter and signals indicating time derivatives of the crop parameter and the processing result parameter as input signals;
the fuzzy logic circuit (222) is configured to generate a steady state signal value (232) that is binary and is based upon the input signals, wherein the steady state signal value (232) indicates a steady state of the crop processing in the harvester (100) based upon the input signals.

14. The harvester (100) according to claim 13, further comprising a controller circuit (220), wherein the steady state signal value (232) is configured to be communicated to the controller circuit (220) for one of automatic control of an actuator (202, 204, 206, 208, 210, 212) for adjusting a crop processing parameter of the harvester (100) and of controlling an operator interface device (154) for indicating an adjustment value for the actuator to a machine operator, wherein the controller circuit (220) is configured to (a) receive the signal indicating the crop parameter, (b) receive the signal indicating the processing result parameter and (c) evaluate the adjustment value based upon the signal indicating the crop parameter and the signal indicating the processing result parameter after the steady state signal value (232) indicates that the harvester (100) has reached a steady state of crop processing.

15. The harvester (100) according to claim 13, wherein the fuzzy logic circuit (222) comprises at least one parameter range classifier circuit (224, 226) for each input signal, wherein said at least one parameter range classifier circuit (224, 226) is configured to provide a respective continuous output indicating a probability that a steady state of the crop processing in the harvester (100) has been reached, and further wherein the fuzzy logic circuit (222) comprises a result evaluation circuit (228) that is configured to receive outputs from the at least one parameter range classifier circuit (224, 226) and is configured to provide the steady state signal value (232) based upon the outputs of the at least one parameter range classifier circuit (224, 226).

## Patentansprüche

1. Verfahren zum Erkennen eines Beharrungsbetriebszustands eines Erntefahrzeugs (100), das folgende Schritte umfasst:
elektronisches Erfassen eines Erntegutparameters (178b, 178c, 178e, 178f, 178g) im Erntefahrzeug (100);
elektronisches Erfassen eines Verarbeitungsergebnisparameters (172a, 172b, 174, 178a, 178d) eines Ergebnisses einer Erntegutverarbeitung im Erntefahrzeug (100);
elektronisches Übertragen des Erntegutparameters, des Verarbeitungsergebnisparameters, einer Zeitableitung des Erntegutparameters und einer Zeitableitung des Verarbeitungsergebnisparameters als Eingabesignale an eine Fuzzy-Logikschaltung (222);
**gekennzeichnet durch**
elektronisches Erzeugen eines Beharrungszustandsignalwerts (232), der binär ist und auf den Eingabesignalen basiert, **durch** die Fuzzy-Logikschaltung (222), wobei der Beharrungszustandsignalwert (232) einen Beharrungszustand der Erntegutverarbeitung im Erntefahrzeug (100) anzeigt.

2. Verfahren zum Erkennen eines Beharrungsbetriebszustands eines Erntefahrzeugs (100) nach Anspruch 1, wobei die Fuzzy-Logikschaltung (222) eine Parameterbereichklassifizierungsschaltung (224, 226) für jedes Eingabesignal umfasst, wobei die Parameterbereichklassifizierungsschaltung (224, 226) eine jeweilige kontinuierliche Ausgabe liefert, die eine Wahrscheinlichkeit anzeigt, dass das Erntefahrzeug (100) einen Beharrungszustand einer Erntegutverarbeitung erreicht hat, und wobei die Fuzzy-Logikschaltung (222) eine Ergebnisauswerteschaltung (228) umfasst, die konfiguriert ist, um die Ausgaben der Parameterbereichklassifizierungsschaltung (224, 226) zu empfangen und den Beharrungszustandsignalwert (232) basierend auf den Ausgaben der Parameterbereichklassifizierungsschaltung (224, 226) zu erzeugen.

3. Verfahren zum Erkennen eines Beharrungsbetriebszustands eines Erntefahrzeugs (100) nach Anspruch 1, wobei die Fuzzy-Logikschaltung (222) eine Konfidenzsignalausgabe (234) liefert, die eine Genauigkeit des Beharrungszustandsignalwerts (232) anzeigt.

4. Verfahren zum Erkennen eines Beharrungsbetriebszustands eines Erntefahrzeugs (100) nach Anspruch 1, wobei die Fuzzy-Logikschaltung (222) ein Zeitsignal (236) liefert, das ein Zeitintervall zum Erreichen des Beharrungszustands nach einer Veränderung eines Erntegutverarbeitungsparameters im Erntefahrzeug (100) anzeigt.

5. Verfahren zum Erkennen eines Beharrungsbetriebszustands eines Erntefahrzeugs (100) nach Anspruch 1, wobei die Fuzzy-Logikschaltung (222) auf eine Auslösefunktionseingabe (238) anspricht, und wobei ferner die Auslösefunktionseingabe (238) ein Mindestkonfidenzniveau anzeigt, das die Fuzzy-Logikschaltung (222) bestimmen muss, bevor die Fuzzy-Logikschaltung (222) dazu anweist, dass der Beharrungszustandsignalwert (232) anzeigen soll, dass der Beharrungszustand erreicht worden ist.

6. Verfahren zum Erkennen eines Beharrungsbetriebszustands eines Erntefahrzeugs (100) nach Anspruch 1, wobei die Fuzzy-Logikschaltung (222) auf eine Gewichtungsfunktionseingabe (240) anspricht, und wobei ferner die Fuzzy-Logikschaltung (222) konfiguriert ist, um Klassifizierungsausgaben bei einem Auswertungsprozess zu priorisieren, sodass Messwerten von Sensoren mit geringer Messgenauigkeit eine niedrigere Gewichtung zukommen kann.

7. System, das angepasst ist, um einen Beharrungsbetriebszustand eines Erntefahrzeugs (100) zu erkennen, und Folgendes umfasst:
einen Erntegutsensor (178b, 178c, 178e, 178f, 178g) zum Erfassen eines Erntegutparameters;
einen Verarbeitungsergebnissensor (172a, 172b, 174, 178a, 178d) zum Erfassen eines Verarbeitungsergebnisparameters eines Ergebnisses einer Erntegutverarbeitung im Erntefahrzeug (100);
eine Fuzzy-Logikschaltung (222), die konfiguriert ist, um ein Signal, das den Erntegutparameter anzeigt, ein Signal, das den Verarbeitungsergebnisparameter anzeigt, und Signale, die Zeitableitungen des Erntegutparameters und des Verarbeitungsergebnisparameters anzeigen, als Eingabesignale zu empfangen;
**dadurch gekennzeichnet, dass**
die Fuzzy-Logikschaltung (222) konfiguriert ist, um einen Beharrungszustandsignalwert (232) zu erzeugen, der binär ist und auf den Eingabesignalen basiert, wobei der Beharrungszustandsignalwert (232) einen Beharrungszustand der Erntegutverarbeitung im Erntefahrzeug (100) anzeigt.

8. System nach Anspruch 7, wobei die Fuzzy-Logikschaltung (222) eine Parameterbereichklassifizierungsschaltung (224, 226) für jedes Eingabesignal umfasst, wobei die Parameterbereichklassifizierungsschaltung (224, 226) eine jeweilige kontinuierliche Ausgabe liefert, die eine Wahrscheinlichkeit anzeigt, dass das Erntefahrzeug (100) einen Beharrungszustand einer Erntegutverarbeitung erreicht hat erreicht worden ist, und wobei die Fuzzy-Logikschaltung (222) eine Ergebnisauswerteschaltung (228) umfasst, die konfiguriert ist, um die Ausgaben der Parameterbereichklassifizierungsschaltung (224, 226) zu empfangen und den Beharrungszustandsignalwert (232) basierend auf den Ausgaben der Parameterbereichklassifizierungsschaltung (224, 226) zu erzeugen.

9. System nach Anspruch 7, wobei die Fuzzy-Logikschaltung (222) zusätzlich eine Konfidenzsignalausgabe (234) liefert, die eine Genauigkeit des Beharrungszustandsignalwerts (232) anzeigt.

10. System nach Anspruch 7, wobei die Fuzzy-Logikschaltung (222) zusätzlich ein Zeitsignal (236) liefert, das ein Zeitintervall zum Erreichen des Beharrungszustands nach einer Veränderung eines Erntegutverarbeitungsparameters im Erntefahrzeug (100) anzeigt.

11. System nach Anspruch 7, wobei die Fuzzy-Logikschaltung (222) auf eine Auslösefunktionseingabe (238) anspricht, und wobei ferner die Auslösefunktionseingabe (238) ein Mindestkonfidenzniveau anzeigt, das die Fuzzy-Logikschaltung (222) bestimmen muss, bevor die Fuzzy-Logikschaltung (222) dazu anweist, dass der Beharrungszustandsignalwert (232) anzeigen soll, dass der Beharrungszustand erreicht worden ist.

12. System nach Anspruch 7, wobei die Fuzzy-Logikschaltung (222) eine Gewichtungsfunktionseingabe (240) aufweist, und wobei ferner die Fuzzy-Logikschaltung (222) konfiguriert ist, um Klassifizierungsausgaben bei einem Auswertungsprozess zu priorisieren, sodass Messwerten von Sensoren mit geringer Messgenauigkeit eine niedrigere Gewichtung zukommen kann.

13. Erntefahrzeug (100), das ein System nach einem der Ansprüche 7 bis 12 zum Erkennen eines Beharrungsbetriebszustands des Erntefahrzeugs (100) umfasst, wobei das System Folgendes umfasst:
mindestens einen Erntegutsensor (178b, 178c, 178e, 178f, 178g) zum Erfassen eines Erntegutparameters;
mindestens einen Verarbeitungsergebnissensor (172a, 172b, 174, 178a, 178d) zum Erfassen eines Verarbeitungsergebnisparameters eines Ergebnisses einer Erntegutverarbeitung im Erntefahrzeug (100);
eine Fuzzy-Logikschaltung (222) ist konfiguriert, um ein Signal, das den Erntegutparameter anzeigt, ein Signal, das den Verarbeitungsergebnisparameter anzeigt, und Signale, die Zeitableitungen des Erntegutparameters und des Verarbeitungsergebnisparameters anzeigen, als Eingabesignale zu empfangen;
die Fuzzy-Logikschaltung (222) ist konfiguriert, um einen Beharrungszustandsignalwert (232) zu erzeugen, der binär ist und auf den Eingabesignalen basiert, wobei der Beharrungszustandsignalwert (232) einen Beharrungszustand der Erntegutverarbeitung im Erntefahrzeug (100) basierend auf den Eingabesignalen anzeigt.

14. Erntefahrzeug (100) nach Anspruch 13, das ferner eine Steuerungsschaltung (220) umfasst, wobei der Beharrungszustandsignalwert (232) konfiguriert ist, um zur automatischen Steuerung eines Stellglieds (202, 204, 206, 208, 210, 212) zum Einstellen eines Erntegutverarbeitungsparameters des Erntefahrzeugs (100) oder zum Steuern eines Bedienerschnittstellengeräts (154) zum Anzeigen eines Einstellwerts für das Stellglied für einen Maschinenbediener an die Steuerungsschaltung (220) kommuniziert zu werden, wobei die Steuerungsschaltung (220) konfiguriert ist, um (a) das Signal, das den Erntegutparameter anzeigt, zu empfangen, (b) das Signal, das den Verarbeitungsergebnisparameter anzeigt, zu empfangen und (c) den Einstellwert basierend auf dem Signal, das den Erntegutparameter anzeigt, und dem Signal, das den Verarbeitungsergebnisparameter anzeigt, auszuwerten, nachdem der Beharrungszustandsignalwert (232) angezeigt hat, dass das Erntefahrzeug (100) einen Beharrungszustand einer Erntegutverarbeitung erreicht hat.

15. Erntefahrzeug (100) nach Anspruch 13, wobei die Fuzzy-Logikschaltung (222) mindestens eine Parameterbereichklassifizierungsschaltung (224, 226) für jedes Eingabesignal umfasst, wobei die mindestens eine Parameterbereichklassifizierungsschaltung (224, 226) konfiguriert ist, um eine jeweilige kontinuierliche Ausgabe zu liefern, die eine Wahrscheinlichkeit anzeigt, dass ein Beharrungszustand der Erntegutverarbeitung im Erntefahrzeug (100) erreicht worden ist, und wobei ferner die Fuzzy-Logikschaltung (222) eine Ergebnisauswerteschaltung (228) umfasst, die konfiguriert ist, um Ausgaben aus der mindestens einen Parameterbereichklassifizierungsschaltung (224, 226) zu empfangen, und konfiguriert ist, um den Beharrungszustandsignalwert (232) basierend auf den Ausgaben der mindestens einen Parameterbereichklassifizierungsschaltung (224, 226) zu liefern.

## Revendications

1. Procédé de détection d'un régime de fonctionnement stable d'une moissonneuse (100), comprenant les étapes consistant à :
détecter électroniquement un paramètre de récolte (178b, 178c, 178e, 178f, 178g) dans la moissonneuse (100) ;
détecter électroniquement un paramètre de résultat de traitement (172a, 172b, 174, 178a, 178d) d'un résultat de traitement de récolte dans la moissonneuse (100) ;
la transmission électronique du paramètre de récolte, du paramètre de résultat de traitement, d'une dérivée temporelle du paramètre de récolte et d'une dérivée temporelle du paramètre de résultat de traitement comme signaux d'entrée dans un circuit de logique floue (222);
**caractérisé par**
la génération électronique, par le circuit de logique floue (222), d'une valeur de signal de régime stable (232) qui est binaire et qui est basée sur les signaux d'entrée, la valeur de signal de régime stable (232) indiquant un régime stable du traitement de récolte dans la moissonneuse (100).

2. Procédé de détection d'un régime de fonctionnement stable d'une moissonneuse (100) selon la revendication 1, dans lequel le circuit de logique floue (222) comprend un circuit de classification de plage de paramètres (224, 226) pour chaque signal d'entrée, le circuit de classification de plage de paramètres (224, 226) fournissant une sortie continue respective indiquant une probabilité que la moissonneuse (100) a atteint un régime stable de traitement de récolte, et dans lequel le circuit de logique floue (222) comprend un circuit d'évaluation de résultats (228) configuré pour recevoir les sorties du circuit de classification de plage de paramètres (224, 226) et générer la valeur de signal de régime stable (232) en fonction des sorties du circuit de classification de plage de paramètres (224, 226).

3. Procédé de détection d'un régime de fonctionnement stable d'une moissonneuse (100) selon la revendication 1, dans lequel le circuit de logique floue (222) fournit une sortie de signal de confiance (234) indiquant une exactitude de la valeur du signal de régime stable (232).

4. Procédé de détection d'un régime de fonctionnement stable d'une moissonneuse (100) selon la revendication 1, dans lequel le circuit de logique floue (222) fournit un signal de temps (236) indiquant un intervalle de temps pour atteindre le régime stable après qu'un paramètre de traitement de récolte dans la moissonneuse (100) a été modifié.

5. Procédé de détection d'un régime de fonctionnement stable d'une moissonneuse (100) selon la revendication 1, dans lequel le circuit de logique floue (222) réagit à une entrée de fonction de déclenchement (238), et dans lequel en outre l'entrée de fonction de déclenchement (238) indiquent un niveau minimum de confiance que le circuit de logique floue (222) doit déterminer avant que le circuit de logique floue (222) commande la valeur de signal de régime stable (232) pour indiquer que le régime stable a été atteint.

6. Procédé de détection d'un régime de fonctionnement stable d'une moissonneuse (100) selon la revendication 1, dans lequel le circuit de logique floue (222) réagit à une entrée de fonction de pondération (240), et dans lequel en outre le circuit de logique floue (222) est configuré pour affecter des priorités aux sorties du classificateur dans un processus d'évaluation de telle sorte que les mesures provenant de capteurs de faible précision puissent être compensées.

7. Système adapté pour détecter un régime de fonctionnement stable d'une moissonneuse (100), comprenant :
un capteur de récolte (178b, 178c, 178e, 178f, 178g) pour détecter électroniquement un paramètre de récolte ;
un capteur de résultat de traitement (172a, 172b, 174, 178a, 178d) pour détecter un paramètre de résultat de traitement d'un résultat de traitement de récolte dans la moissonneuse (100) ;
un circuit de logique floue (222) configuré pour recevoir un signal indiquant le paramètre de récolte, un signal indiquant le paramètre de résultat de traitement et
des signaux indiquant des dérivés temporelles du paramètre de récolte et du paramètre de résultat de traitement comme signaux d'entrée;
**caractérisé en ce que**
le circuit de logique floue (222) est configuré pour générer une valeur de signal de régime stable (232) qui est binaire et qui est basée sur les signaux d'entrée, la valeur de signal de régime stable (232) indiquant un régime stable du traitement de récolte dans la moissonneuse (100).

8. Système selon la revendication 7, dans lequel le circuit de logique floue (222) comprend un circuit de classification de plage de paramètres (224, 226) pour chaque signal d'entrée, le circuit de classification de plage de paramètres (224, 226) fournissant une sortie continue respective indiquant une probabilité que la moissonneuse (100) a atteint un régime stable de traitement de récolte a été atteint, et dans lequel le circuit de logique floue (222) comprend un circuit d'évaluation de résultat (228) configuré pour recevoir les sorties du circuit de classification de plage de paramètres (224, 226) et générer la valeur du signal de régime stable (232) en fonction des sorties du circuit de classification de plage de paramètres (224, 226).

9. Système selon la revendication 7, dans lequel le circuit de logique floue (222) fournit de plus une sortie de signal de confiance (234) indiquant une exactitude de la valeur de signal de régime stable (232).

10. Système selon la revendication 7, dans lequel le circuit de logique floue (222) fournit de plus un signal de temps (236) indiquant un intervalle de temps pour atteindre le régime stable après qu'un paramètre de traitement de récolte dans la moissonneuse (100) a été modifié.

11. Système selon la revendication 7, dans lequel le circuit de logique floue (222) réagit à une entrée de fonction de déclenchement (238), et dans lequel en outre l'entrée de fonction de déclenchement (238) indique un niveau de confiance que le circuit de logique floue (222) doit déterminer avant que le circuit de logique floue (222) commande la valeur de signal de régime stable (232) pour indiquer que le régime stable a été atteint.

12. Système selon la revendication 7, dans lequel le circuit de logique floue (222) réagit à une entrée de fonction de pondération (240), et dans lequel en outre le circuit de logique floue (222) est configuré pour affecter des priorités aux sorties du classificateur dans un processus d'évaluation de telle sorte que les mesures provenant de capteurs de faible précision puissent être compensées.

13. Moissonneuse (100) comprenant un système selon l'une quelconque des revendications 7 à 12 pour détecter un régime de fonctionnement stable de la moissonneuse (100), le système comprenant :
un capteur de récolte (178b, 178c, 178e, 178f, 178g) pour détecter électroniquement un paramètre de récolte ;
un capteur de résultat de traitement (172a, 172b, 174, 178a, 178d) pour détecter un paramètre de résultat de traitement d'un résultat de traitement de récolte dans la moissonneuse (100) ;
un circuit de logique floue (222) est configuré pour recevoir un signal indiquant le paramètre de récolte, un signal indiquant le paramètre de résultat de traitement et des signaux indiquant des dérivés temporelles du paramètre de récolte et du paramètre de résultat de traitement comme signaux d'entrée;
le circuit de logique floue (222) étant configuré pour générer une valeur de signal de régime stable (232) qui est binaire et qui est basée sur les signaux d'entrée, la valeur de signal de régime stable (232) indiquant un régime stable du traitement de récolte dans la moissonneuse (100) en fonction des signaux d'entrée.

14. Moissonneuse (100) selon la revendication 13, comprenant en outre un circuit de contrôleur (220), dans laquelle la valeur de signal de régime stable (232) est configurée pour être communiquée au circuit contrôleur (220) pour l'une d'une commande automatique d'un actionneur (202, 204, 206, 208, 210, 212) pour régler un paramètre de traitement de récolte de la moissonneuse (100) et d'une commande d'un dispositif d'interface d'opérateur (154) pour indiquer une valeur de réglage de l'actionneur à un opérateur de la machine, dans lequel le circuit de contrôleur (220) est configuré pour (a) recevoir le signal indiquant le paramètre de récolte, (b) recevoir le signal indiquant le paramètre de résultat de traitement et (c) évaluer la valeur de réglage en fonction du signal indiquant le paramètre de récolte et du signal indiquant le paramètre de résultat de traitement après que la valeur de signal de régime stable (232) indique que la moissonneuse (100) a atteint un régime stable de traitement de récolte.

15. Moissonneuse (100) selon la revendication 13, dans laquelle le circuit de logique floue (222) comprend un circuit de classification de plage de paramètres (224, 226) pour chaque signal d'entrée, le circuit de classification de plage de paramètres (224, 226) étant configuré pour fournir une sortie continue respective indiquant une probabilité qu'un régime stable de traitement de récolte dans la moissonneuse (100) a été atteint, et dans laquelle en outre le circuit de logique floue (222) comprend un circuit d'évaluation de résultats (228) configuré pour recevoir les sorties du circuit de classification de plage de paramètres (224, 226) et est configuré pour fournir la valeur de signal de régime stable (232) en fonction des sorties de l'au moins un circuit de classification de plage de paramètres (224, 226).
